# EUROPEAN PATENT APPLICATION

(11) **EP 1 517 488 A2**
(43) Date of publication of application: **23.03.2005**
(21) Application number: 04104427.2
(22) Date of filing: 14.09.2004
(51) Int. Cl.: H04L 12/56

(54) **Mechanism for improving connection control in peer-to-peer ad-hoc networks**

(30) Priority: 16.09.2003 US 662470
(71) Applicant: Nokia Corporation, 02150 Espoo (FI)
(72) Inventor: Ekberg, Jan-Erik, 00320 Helsinki (FI)
(74) Representative: Piotrowicz, Pawel Jan Andrzej

(57) **Abstract**

A computer system, method, and computer program product for locating target devices that support a required service in an ad-hoc communications network. The ad-hoc communications network connects devices and support services. Each target device is one of the devices and the required service is one of the services. The method comprises conducting an inquiry of the ad-hoc communications network to discover nearby devices. If the inquiry indicates that the nearby devices may include a middleware layer, the method further comprises creating a connection to each of the nearby devices and confirming whether each of the nearby devices includes the middleware layer. For each of the nearby devices that includes the middleware layer, the method further comprises sending a service discovery request, and receiving a response that includes distributed information. The distributed information includes associations between the services such as the required service, and the devices such as the target devices.

## Description

### CROSS-REFERENCE TO RELATED APPLICATIONS

This application for letters patent is related to and incorporates by reference United States patent application serial number 10/284,135, titled "DEVICE DETECTION AND SERVICE DISCOVERY SYSTEM AND METHOD FOR A MOBILE AD HOC COMMUNICATIONS NETWORK", and filed in the United States Patent and Trademark Office on October 31, 2002. This application for letters patent is also related to and incorporates by reference United States continuation-in-part patent application serial number SS/XXX,YYY, titled "DEVICE DETECTION AND SERVICE DISCOVERY SYSTEM AND METHOD FOR A MOBILE AD HOC COMMUNICATIONS NETWORK", and filed in the United States Patent and Trademark Office on September 16, 2003. This application for letters patent is also related to and incorporates by reference United States patent application serial number SS/XXX,YYY, titled "APPLICATION CONTROL IN PEER-TO-PEER AD-HOC COMMUNICATION NETWORKS", and filed in the United States Patent and Trademark Office on September 16, 2003. The assignee is the same in this patent application and the related patent applications.

### FIELD OF THE INVENTION

The present invention relates, in general, to communication between devices connected to a wireless communications network. In particular, the present invention is a mechanism for improving the establishment and control of link connections between wireless communication devices in a spontaneous and instant (ad-hoc) network.

### BACKGROUND OF THE INVENTION

Short-range wireless systems have a range of less than one hundred meters, but may connect to the Internet to provide communication over longer distances. Short-range wireless systems include, but are not limited to, a wireless personal area network (PAN) and a wireless local area network (LAN). A wireless PAN uses low-cost, low-power wireless devices that have a typical range of ten meters. An example of a wireless PAN technology is the Bluetooth Standard. The Bluetooth Standard operates in the 2.4 GHz Industrial, Scientific, and Medical (ISM) band and provides a peak air-link speed of one Mbps and a power consumption low enough for use in personal, portable electronics such as a personal digital assistance or mobile phone. A description of the Bluetooth communication protocol and device operation principles is in *Bluetooth Special Interest Group, Specification of the Bluetooth System*, version 1.1, volumes 1 and 2, February 22, 2001. Another example of a wireless PAN technology is a standard for transmitting data via infrared light waves developed by the Infrared Data Association (IrDA), a group of device manufacturers. IrDA ports enable computers, such as a laptop, or devices, such as a printer, to transfer data from one device to another without any cables. IrDA ports support roughly the same transmission rates as traditional parallel ports and the only restriction on their use is that the two devices must be within a few feet of each other and have a clear line of sight. A wireless LAN is more costly than a wireless PAN, but has a longer range. An example of a wireless LAN technology is the IEEE 802.11 Wireless LAN Standard and the HIPERLAN Standard. The HIPERLAN Standard operates in the 5 GHz Unlicensed-National Information Infrastructure (U-NII) band and provides a peak air-link speed between ten and one hundred Mbps.

An ad-hoc network is a short-range wireless system comprising an arbitrary collection of wireless devices that are physically close enough to exchange information. An ad-hoc network is constructed quickly with wireless devices joining and leaving the network as they enter and leave the proximity of the remaining wireless devices. An ad-hoc network also may include one or more access points, that is, stationary wireless devices operating as a stand-alone server or as gateway connections to other networks.

In the future, the Bluetooth Standard will likely support the interconnection of multiple piconets to form a multi-hop ad-hoc network, or scatternet. In a scatternet, a connecting device forwards traffic between different piconets. The connecting device may serve as a master device in one piconet, but as a slave device or a master device in another piconet. Thus, the connecting devices join the piconets that comprise a scatternet by adapting the timing and hop sequence to the respective piconet and possibly changing the roles that they serve from a master device to a slave device.

A Bluetooth device includes, but is not limited to, a mobile telephone, personal or laptop computer, radio-frequency identification tag, and personal electronic device such as a personal digital assistant (PDA), pager, or portable-computing device. Each Bluetooth device includes application and operating system programs designed to find other Bluetooth devices as they enter and leave the communication range of the network. The requesting Bluetooth device in a client role and the responding Bluetooth device in a server role establish a proximity link between the two devices. The requesting and responding Bluetooth device use the proximity link and a service discovery protocol to discover the services offered by the other Bluetooth device and how to connect to those services.

The Bluetooth standard required the discovery of devices before initiating a connection to the devices. Device discovery (i.e., an inquiry) provides a device with a list of nearby devices that are in range and allows the device to obtain details that will be helpful when establishing a connection to the nearby devices. The Bluetooth standards relies upon the bit codes in the General Inquiry Access Code (GIAC) returned during the inquiry phase to make it possible to perform service discovery before connection establishment. These bit codes specify general capabilities of a nearby device such as whether it has networking capabilities or may be used as a modem. Using these standardized bit codes, the prior art can create a rough sorting of the devices connected to an ad-hoc network.

Link connection establishment in prior art devices enabled with Bluetooth, version 1.0 or 1.1, is in practice very slow. In these prior art devices, an inquiry or page takes 5-10 seconds and a link connection establishment takes 1-2 seconds. When the density of Bluetooth devices in a peer-to-peer ad-hoc network is high and a specific service is not available on each device, a relatively large amount of time is spent connecting to devices that do not support the service in question. When scanning for a specific service, the prior art discovers suitable peers by connecting to every peer that satisfies a specific GIAC and making a service discovery request by using a Service Discovery Protocol or a legacy protocol.

Thus, there is a need for a system and method that locates and establishes link connections to wireless communication devices in a spontaneous and instant (ad-hoc) network. The system and method eliminates the time-consuming nature of the prior art process and will make it possible to discover the services available in a peer device faster and in much greater detail than by using the normal Bluetooth connection establishment and service discovery. The system and method will be especially useful when assuming that a typical terminal is running several simultaneous Bluetooth-enabled applications and is located in a relatively static environment with a dense population of Bluetooth devices. The relatively static environment includes a train station, a bus, or a workplace. The present invention addresses this need.

### SUMMARY OF THE INVENTION

A computer system, method, and computer program product for locating target devices that support a required service in an ad-hoc communications network. The ad-hoc communications network connects devices and support services. Each target device is one of the devices and the required service is one of the services. The method comprises conducting an inquiry of the ad-hoc communications network to discover nearby devices. If the inquiry indicates that the nearby devices may include a middleware layer, the method further comprises creating a connection to each of the nearby devices and confirming whether each of the nearby devices includes the middleware layer. For each of the nearby devices that includes the middleware layer, the method further comprises sending a service discovery request, and receiving a response that includes distributed information. The distributed information includes associations between the services such as the required service, and the devices such as the target devices.

In one embodiment, the coverage area of the ad-hoc communications network includes a high density of nearby devices. In another embodiment, the ad-hoc communications network is static in either the number of nearby devices connected to the network, or the applications and services installed in the nearby devices.

In another embodiment, for each of the nearby devices that include the middleware layer, the method further comprises storing the disclosed information in a local memory. When the local memory is full, the method identifies the oldest record in the local memory, and overwrites the oldest record with the new information. Alternatively, when the local memory is full, the method identifies a stored record in the local memory that the new information will replace, and overwrites the stored record with the new information.

In yet another embodiment, the method comprises maintaining a distributed database to associate each of the services to one or more of the devices, conducting an inquiry of the ad-hoc communications network to discover nearby devices, and accessing the distributed database to determine whether each of the nearby devices include the required service. If the distributed database includes an association between one of the nearby devices and the required service, the method establishes a link connection with the nearby device. Alternatively, if the distributed database does not include an association between one of the nearby devices and the required service, the method declines establishing a link connection with the nearby device.

### BRIEF DESCRIPTION OF THE DRAWINGS

The accompanying figures best illustrate the details of the system and method for establishing link connections between wireless communication devices in a spontaneous and instant (ad-hoc) network, both as to its structure and operation. Like reference numbers and designations in these figures refer to like elements.

Figure **1** is a network diagram that illustrates the interaction of the devices that comprise a mobile ad-hoc communications network, in accordance with one embodiment of the present invention.

Figure **2A** is a block diagram that illustrates the hardware and software components comprising server **110** shown in Figure **1**, in accordance with one embodiment of the present invention.

Figure **2B** is a block diagram that illustrates the hardware and software components comprising terminal **120** shown in Figure **1**, in accordance with one embodiment of the present invention.

Figures **3A-3C** are flow diagrams of various embodiments of a process for locating a required service supported by a target device in a mobile ad-hoc communications network.

Figure **4** is a flow diagram of an embodiment of a process that illustrates the message flow during establishment of a communication session between terminal X and terminal Y in a mobile ad-hoc communications network.

### DETAILED DESCRIPTION OF THE INVENTION

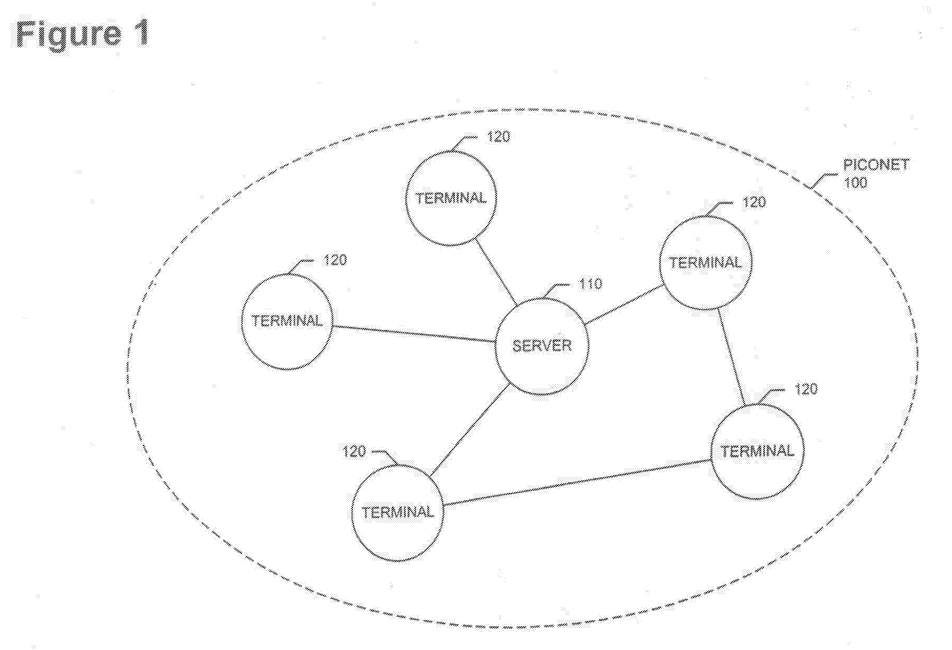

Figure **1** is a network diagram that illustrates the interaction of the devices that comprise a mobile ad-hoc communications network, in accordance with one embodiment of the present invention. In one embodiment, the mobile ad-hoc communications network is a Bluetooth piconet that includes one master device and up to seven active slave devices. As shown in Figure **1,** piconet **100** includes server **110** and five instances of terminal **120.** Server **110** maintains the network clock and is the communication manager for each instance of terminal **120.** Server **110** typically initiates an exchange of data with an instance of terminal **120.** Two instances of terminal **120** typically communicate through the server **110** however, if two instances of terminal **120** communicate directly, one instance will assume the role of server, or master, and the other instance will assume the role of client, or slave.

Each device in the mobile ad-hoc communications network will either assume the role of a terminal device or a server device. A terminal device is a consumer of services that a single user operates. A terminal device includes devices such as a mobile phone or PDA. A server is typically a stationary device and only produces services. A server device creates a hotspot around them for using their services. "Hotspot" refers to the radio coverage area provided by the server device for detecting devices and discovering services offered by the applications hosted in the server. If the server device is not stationary, one of the terminal devices in the network will assume the role of application directory server and perform device detection and service discovery functions for the remaining terminal devices in the network. The disclosed invention introduces two roles among such terminal devices, application directory servers and terminals, where application directory servers serve terminals in device detection and service discovery. If stationary servers with hotspots exist, servers typically act as application directory servers however, device detection and service discovery is possible without such a stationary server because one of the terminals will assume the application directory server duties.

In an ad-hoc network, such as piconet **100,** each device explicitly connects to every plausible peer. When each device performs a service discovery operation, it stores the relevant context information of all services available known by the peer, providing that the devices are compatible in the sense of the middleware being used. Thus, each device essentially performs an action similar to the routing update procedure in a link-state routing protocol. However, in this case the exchanged information is not for reachability and routing information, but for installed applications and contexts related to a specific device (e.g., MAC address). According to the present invention, each device will graciously forward this information to any other peers encountered, within a certain time as constrained by database size limits. Thus, when a device is conducting an inquiry on piconet **100** and obtains the MAC address for one of the neighboring devices, the device may also obtain information about the other neighboring devices and identify the most 'promising' device for a connection, thereby saving unnecessary connection attempts. In the same manner, information about devices that do not conform to the middleware (i.e., a connection attempt to the device failed in the sense that there was no corresponding middleware in the peer) can be singled out in the same databases, thereby eliminating another set of unnecessary connections.

Implementing the aforementioned mechanism requires careful planning of parameter values, and determining what information will take priority when disjoint information is distributed. In one embodiment, a sense of time is maintained using local clocks and hop counts. For a given peer, the possible drawbacks include cases in which, for example, a peer only activates the middleware at the present time, and the collective knowledge of it (in the distributed database) describes it as non-conforming. Thus, service initiation for the given peer will be slower than for a system with no memory because it must first conduct an inquiry to connect to a peer, and only after a delay will its status be updated in the environment. This may be regarded as a reason or stimulant for a device to continuously cooperate in the network.

Persistence of distributed information can only be maintained within limits of the device memory and channel bandwidth. Since bandwidth in a proximity network such as piconet 100 is free and fairly abundant, memory consumption becomes the primary bottleneck. The disclosed invention allocates a portion of memory in the device and reserves the portion of memory for storing the distributed device and application information. In one embodiment, the portion of memory is fixed in size. In another embodiment, the portion of memory is dynamically allocated to accommodate network need or activity. When the portion of memory is full, the device will store new information by overwriting the oldest information with the new information. However, the oldest information may not be overwritten if the new information is intended to directly replace (i.e., override) previously stored information from the same source or same application.

The determination of whether one information record is older than another information record depends upon the method used to store a sequence number associated with the information record. If the sequence number is from the local device, the sequence number defines the order that information records were entered into the local database. However, if the sequence number is distributed from the source device, the sequence number alone is not reliable for determining the order that information records were entered into the local database. Thus, the disclosed invention relies on the hop count and sequence number to determine which information record takes priority.

The hop count is the number of times the information record has traveled from one device to another device. If the sequence number is set in the local device, an information record with a low hop count will always take priority over (i.e., considered newer) an information record with a high hop count. If the sequence number is distributed from the source device, an information record with a low hop count takes priority over (i.e., considered newer) an information record with a high hop count unless the two information records are from the same device wherein the sequence number determines priority.

The device generating the information record assigns the sequence, number. If the sequence number is from the local device, the sequence number forms a unique ordering of the information records. When a timestamp is employed, the timestamp will take priority over the sequence number. If the sequence number is distributed from the source device, information records that form the same "hop count set" will be partially ordered based on their sequence number. This is a valid ordering because information records from devices that have not been running long get somewhat lower priority based on the assumption that sequence numbers restart when the device is started. Thus, when an information record from the same device and for the same application is updated, the information record will contain the information associated with the information record having the higher sequence number, but the lower hop count of the two information records will be used.

The disclosed invention timestamps each incoming information record and removes the information record after it has been stored for a pre-defined period (e.g., 5 minutes). This aging of the information records in combination with the hop count solves problems with sequence number wrap-around. Furthermore, since the network topology and the conveyed information are highly dynamic, long-term storage of the information is unnecessary at best. No additional intelligent sorting or 'clean-up' functionality by the information distributor is necessary because the sender cannot know the need for information two or even three hops away, especially when the network topology also is in flux.

The disclosed invention uses the hop count, sequence number, and timestamp to (1) determine the freshness of information (i.e., determining for duplicate records which record takes precedence), and (2) determine an internal ordering and decide the age of information. A sequence number is always set by the source device and is never changed. A timestamp is set at a local device for each hop. A hop count is updated for each device that is encountered. Thus, for duplicate records from a single source, the determination of freshness can be resolved by examining the hop count and sequence number alone. The disclosed invention updates a record as a duplicate if the sequence number is lower, or if the sequence numbers are equal, but the hop count is lower. Determining an internal ordering and deciding the age of information (i.e., dropping a record due to memory constraints) is trickier. The disclosed invention orders the records from lowest hop count to highest hop count and drops the record with the highest hop count and oldest timestamp.

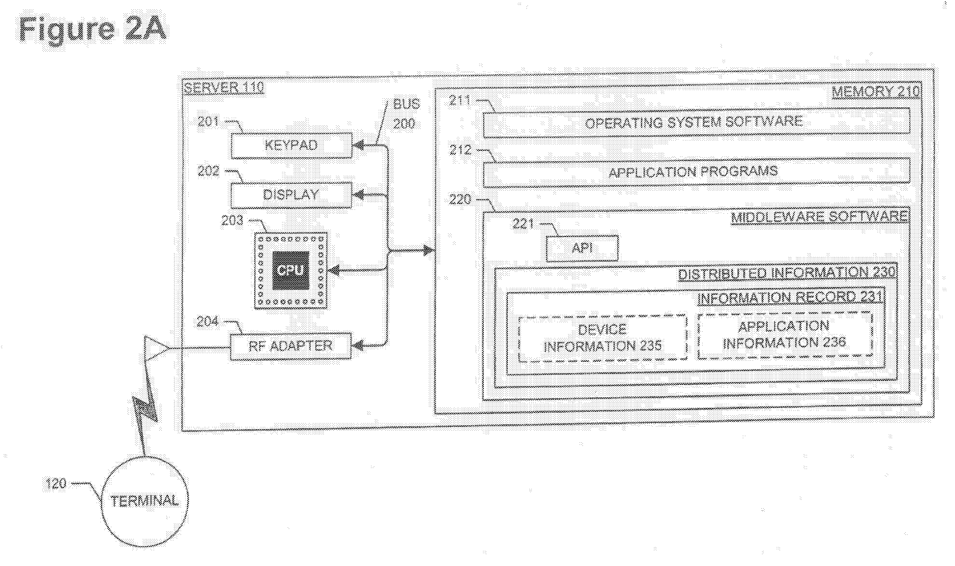

Figure **2A** is a block diagram that illustrates the hardware and software components comprising server **110** shown in Figure **1,** in accordance with one embodiment of the present invention. Server **110** is a general-purpose wireless device. Bus **200** is a communication medium that connects keypad **201**, display **202**, central processing unit (CPU) **203,** and radio frequency (RF) adapter **204** to memory **210.** RF adapter **204** connects via a wireless link to terminal **120** and is the mechanism that facilitates network traffic between server **110** and terminal **120.**

CPU **203** performs the methods of the disclosed invention by executing the sequences of operational instructions that comprise each computer program resident in, or operative on, memory **210**. Memory **210** includes operating system software **211,** application programs **212,** and middleware software **220.** Operating system software **211** controls keypad **201,** display **202,** RF adapter **204,** and the management of memory **210.** Application programs **212** control the interactions between a user and server **110.** Middleware software **220** includes an application program interface (API) **221** that help an application program running on server **110** find and communicate with a counterpart application running on terminal **120.** To track the distributed device and application information, middleware software **220** also includes distributed information **230** to store data records such as information record **231.** In one embodiment, information record **231** includes either device information **235** or application information **236**. In another embodiment, information record **231** stores both device information **235** and application information **236**.

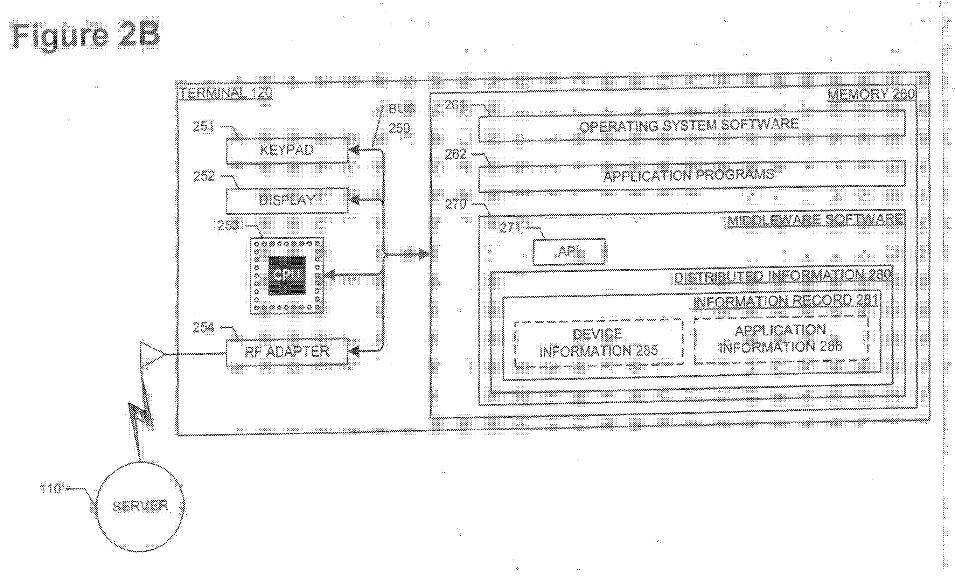

Figure **2B** is a block diagram that illustrates the hardware and software components comprising terminal **120** shown in Figure **1**, in accordance with one embodiment of the present invention. Terminal **120** is a general-purpose wireless device. Bus **250** is a communication medium that connects keypad **251**, display **252**, CPU **253**, and RF adapter **254** to memory **260**. RF adapter **254** connects via a wireless link to server **110** or another terminal **120** and is the mechanism that facilitates network traffic between server **110** and terminal **120.**

CPU **253** performs the methods of the disclosed invention by executing the sequences of operational instructions that comprise each computer program resident in, or operative on, memory **260.** Memory **260** includes operating system software **261,** application programs **262,** and middleware software **270.** Operating system software **261** controls keypad **251**, display **252**, RF adapter **254**, and the management of memory **260**. Application programs **262** control the interactions between a user and terminal **120**. Middleware software **270** includes an API 271 that help an application program running on terminal **120** find and communicate with a counterpart application running on server **110** or another terminal **120**. To track the distributed device and application information, middleware software **270** also includes distributed information **280** to store data records such as information record **281**. In one embodiment, information record **281** includes either device information **285** or application information **286**. In another embodiment, information record **281** stores both device information **285** and application information **286.**

In one embodiment, the configuration of memory **210** and memory **260** is identical. In another embodiment, the configuration of memory **210** and memory **260** only includes the software necessary to perform the essential tasks of server **110** and terminal **120,** respectively. For example, if terminal **120** needs to receive a general inquiry access code, but does not need to send a general inquiry access code message, only the software that receives this message will reside in memory **260.**

An application executing on a terminal is constantly searching for a counterpart application, that is, another instance of the same application that can communicate with the application. Each instance of an application assumes a particular role. Communication between an application and a counterpart application is only meaningful if the roles are complementary. For example, an application that assumes the role of "client" can communicate with a counterpart application that assumes the role of "server". When two applications with the same identifier have complementing roles, the applications can communicate with each other. Middleware software is a software layer with an API that negotiates the communication between two applications to help an application find a counterpart application with the correct role. Thus, an application installed in a terminal will be activated when a suitable counterpart application in a neighboring peer node is found, and the device is attached to the node in question.

A new application is installed by "installer" applications that use middleware for finding counterparts and installing the new application into the local storage of a terminal. The actual finding and selection of new applications takes place at the application level. Initially, the installer application will be a dedicated "browser-supplier" (i.e., client-server) application that accesses counterpart applications in servers, browses their available application databases, allows a user to pick the applications to install, and downloads and installs the new applications. Later, the corresponding functionality may be added to a wireless access protocol (WAP) and hypertext markup language (HTML) browsers.

Service discovery can be viewed, in general, as a three-step process. First, new potential applications are found and will be considered for installation. Second, active installed applications begin to search for counterpart applications. The middleware architecture in the disclosed invention mediates this second step. Third, active installed and running applications begin searching for common resources such as printers (i.e., resource discovery). The middleware architecture in the disclosed invention assists with the first and second steps, but relies upon the applications to perform resource discovery. Typically, a terminal application communicates with its counterpart application and use local (i.e., server) resources. If an application uses a private resource, the associated service discovery is implemented by the application in a standard (e.g., Bluetooth or Bluetooth/Java) in a way not supported by the terminal middleware software.

The middleware architecture illustrates one embodiment of the disclosed invention. The following is a description of the information maintained and distributed in the middleware architecture.

### Peer or Device Information

Table **1** illustrates an example of the disclosed invention storing peer or device information. Table **1** shows the data stored in a device memory such as distributed information **230** or distributed information **280**.

**Table 1 -**

| **Exemplary Peer or Device Information** | | | | | | |
|---|---|---|---|---|---|---|
| **State** | **Address** | **Friendly Name** | **HC** | **Seq. Nr.** | **Time Val.** | **Time Ctr.** |
| 00000001 | 00E0032439EB | HelsinkiExpert | 00 | 00000001 | 00000000 | 00000001 |
| 00000002 | 00E003254B95 | unk_1 | 01 | 00000013 | 00000000 | 00000013 |

The State field indicates whether a device is reachable through another peer or not, and whether the peer is not running the middleware (i.e., not reachable). If State = 0, a peer is not reachable. If State = 1, a direct connection with the peer exists. If State = 2, the peer is one hop away. The implementation of this aspect of the disclosed invention in the middleware architecture does not support actual routing. Thus, State = 2 indicates that a peer is reachable through a single hop (i.e., via one peer).

The Address and Friendly Name fields identify the subject device. As shown in Table 1, the coded Address accompanies the readable Friendly Name. The devices communicate using the coded Address, but the users recognize the device using the Friendly name.

The HC field (Hop Count) indicates the distance the record has traveled before reaching the current device. If HC = 0, the information is stored in the peer that is storing the table. If HC = 1, the information was received directly from another peer. If HC = 2, the information was received from a peer through another peer, and so on. Thus, the Hop Count is a significant field when determining the freshness of the information on the subject device.

The Seq. Nr. (Sequence Number), Time Val. (Time Value), and Time Ctr. (Time Counter) fields are used to estimate the freshness of the information for the subject device. As described previously, the values stored in these fields are useful when determining the aging of information records.

### Application Information

Table 2 illustrates an example of the disclosed invention storing application information. Table 2 shows the data stored in a device memory such as distributed information **230** or distributed information **280.**

**Table 2 -**

| **Exemplary Application Information** | | | | | | | | |
|---|---|---|---|---|---|---|---|---|
| **Appl_Id** | **Capabil.** | **Version** | **State** | **Address** | **HC** | **Seq. Nr.** | **Time Val.** | **Time Ctr.** |
| 101F5C95 | 00010001 | 00010001 | 00000403 | 00E0032439EB | 00 | 00000005 | 00000000 | 00000005 |
| 0DCDBABE | 00020001 | 00010001 | 00000403 | 00E0032439EB | 00 | 00000009 | 00000000 | 00000009 |
| 02871089 | 00010002 | 00010001 | 00000403 | 00E0032439EB | 00 | 0000000D | 00000000 | 0000000D |
| 00273D49 | 00020001 | 00010001 | 00000423 | 00E0032439EB | 00 | 00000011 | 00000000 | 00000011 |
| 02871089 | 00020001 | 00010001 | 00000403 | 00E003254B95 | 01 | 0000000D | 00000000 | 0000000D |

For each application, the State field stores information regarding the state of the distributed nature of the application (e.g., whether the application is installed, currently running, or is configured to allow auto-starting). The Version and Capabil. (Capability) fields indicate the role played by the application (e.g., client-server role, and language choices). These fields also help the middleware to decide whether a match is possible with another application. As shown in Table 2, since application 02871089 is available to address 00E0032439EB and 00E003254B95, the devices associated with these address should be able to communicate using application 02871089 because the capability, version, and state fields are complementary. In another embodiment, an additional informational vector, transferred as part of an "application update" is useful to make application compatibility decisions.

An implementation of the application information shown in Table 2 for the middleware architecture transfers information concerning previous connections per application. For example, application A previously communicated when a connection existed between peer X and peer Y. Using this approach, the length of the history must be restricted, but the information can be useful when running information-sharing type of applications. Thus, if we based on the fact that peer X has communicated with peer Y, that connecting to peer Y will result in application A also knowing everything stored in peer X, after connecting to peer Y, we might connect to some unknown peer Z rather than to peer X, if application A is our top-priority application.

Table **1** and Table **2** depict illustrations of an implementation of the disclosed invention in the middleware architecture. The disclosed invention may be implemented in the context of any Bluetooth middleware or as an extension to the standardized Service Discovery Protocol (SDP) in Bluetooth. The built-in database for Bluetooth SDP could benefit from a more limited version of the distributed database described above. The basic functionality would be to make a complete SDP data exchange between peer devices in the state where they have established a connection for communication (in practice immediately after the actual SDP queries have been performed). On the other hand, when a terminal device has access to "proxied" information from other terminals, it could perform a local "proxy SDP query" immediately after Bluetooth inquiry but before paging and connecting to the peer, saving some unnecessary connections. In fact, the accuracy of the system in the SDP case is probably higher than in the other described example, as the attributes in the SDP database by nature are more persistent.

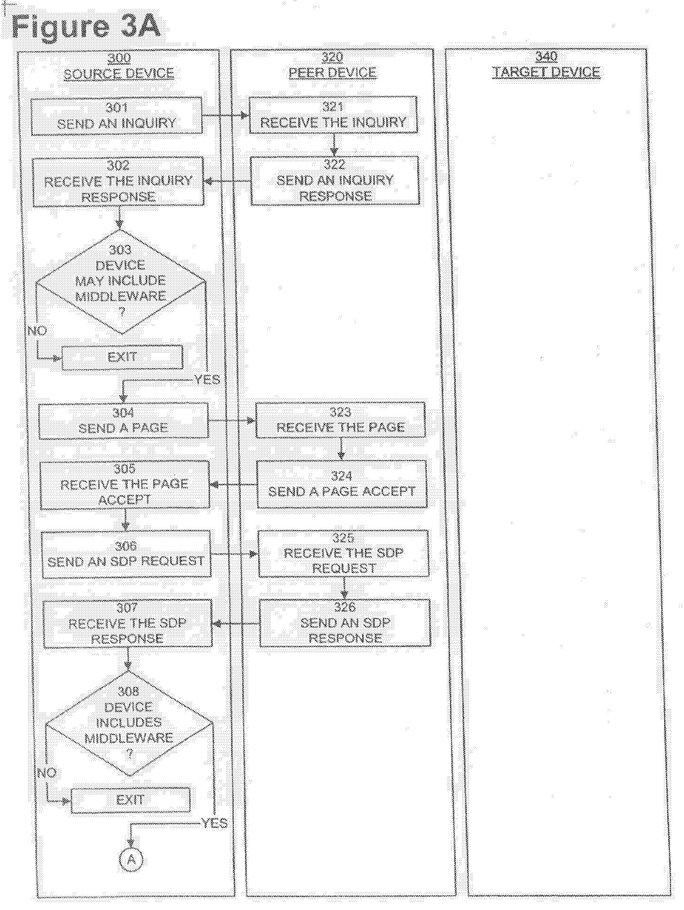

Figures **3A-3C** are flow diagrams of various embodiments of a process for locating a required service supported by a target device in a mobile ad-hoc communications network. The mobile ad-hoc communications network connects a number of devices. Figures **3A-3C** illustrate three of these devices, source device **300,** peer device **320,** and target device **340.**

Figure **3A** illustrates the initiation of a process for a source device to determine whether a peer device includes a middleware layer and to establish a link between the devices in a mobile ad-hoc communications network. Source device **300** initiates the process shown in Figure **3A** by sending an inquiry request to the mobile ad-hoc communications network (step **301**). Peer device **320,** one of the devices in the mobile ad-hoc communications network that is in inquiry scan mode, receives the inquiry request (step **321**) and responds by sending an inquiry response message (step **322**). In one embodiment, the inquiry response message is a Bluetooth inquiry result command modified to indicate that peer device **320** includes a middleware layer. Source device **300** receives the inquiry response message (step **302**). Source device **300** examines the inquiry response message to determine whether the inquiry response message includes an indication that peer device **320** may include the middleware layer (step **303**). If the inquiry response message does not include the indication, the process exits. If the inquiry response message includes the indication, source device **300** sends a paging request message (step **304**). Peer device **320** receives the paging request message (step **323**) and sends a paging accept message in response (step **324**). Source device **300** receives the paging accept message (step **305**) and sends an SDP request (step **306**). Peer device **320** receives the SDP request (step **325**) and sends an SDP response (step **326**). Source device **300** receives the SDP response (step **307**) and confirms whether peer device **320** includes the middleware layer (step **308**). In one embodiment, a recognition request message and subsequent response message will confirm whether peer device **320** includes the middleware layer. If peer device **320** does not include the middleware layer, the process exits.

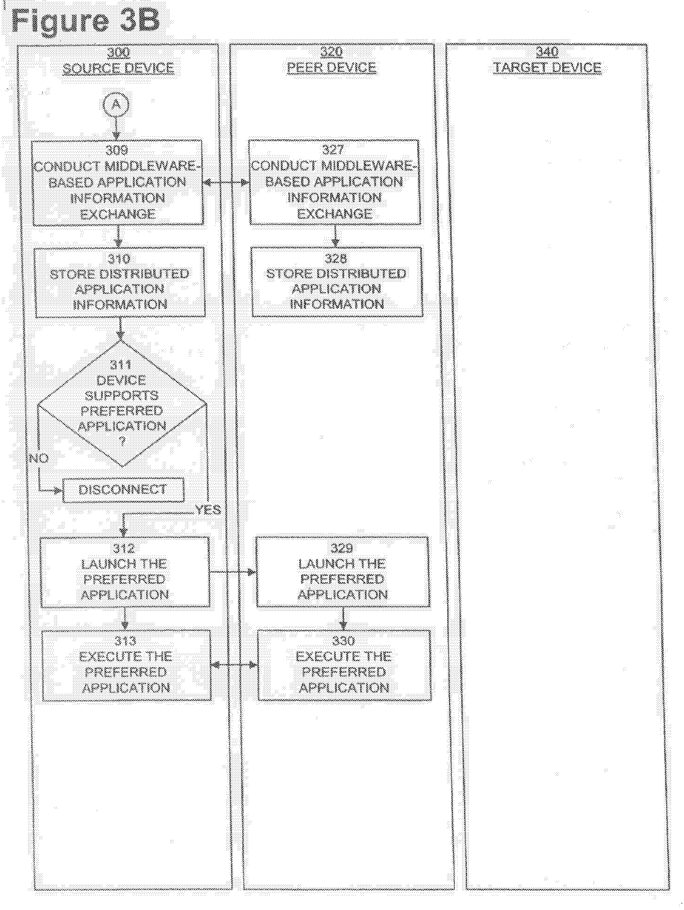

Figure **3B** is a continuation of the process shown in Figure **3A** that illustrates using the link to exchange application directory information after confirming that the middleware layer is present in the peer device. If peer device **320** includes the middleware layer, source device **300** initiates a message exchange with peer device **320** to conduct middleware-based application information exchange (steps **309** and **327**). Based on the message exchange, source device **300** and peer device **320,** respectively, store distributed application information (steps **310** and **328**). Source device **300** examines the distributed application information to determine whether peer device **320** supports a preferred application (step **311**). If peer device **320** does not support the preferred application, source device **300** disconnects from peer device **320**. If peer device **320** supports the preferred application, source device **300** launches the preferred application (step **312)**. This triggers peer device **320** to launch a counterpart for the preferred application (step **329**). Thus, source device **300** and peer device **320** begin communication, respectively, by executing the preferred application (steps **313** and **330**).

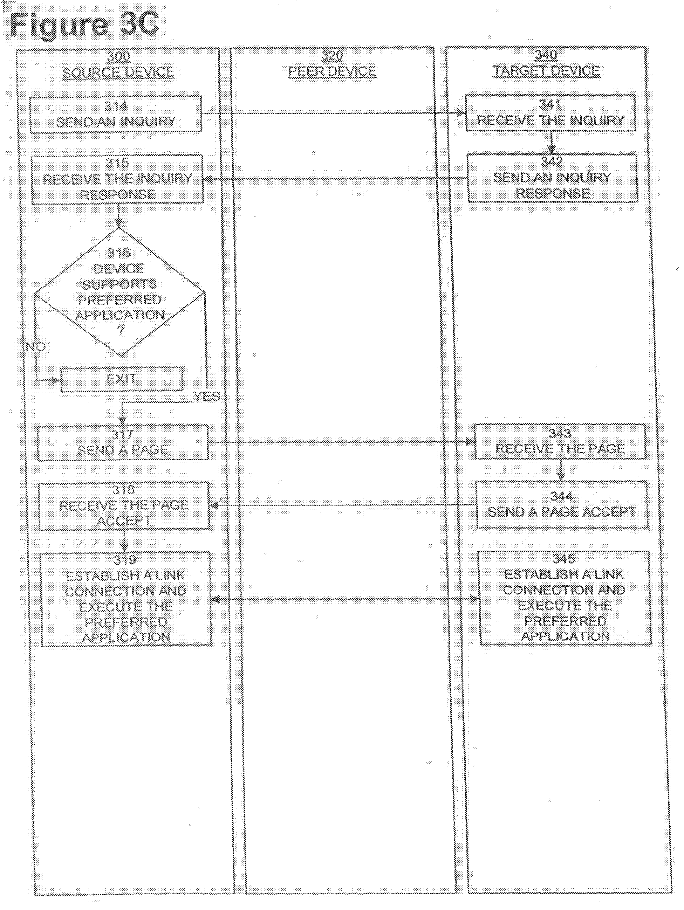

Figure **3C** is a continuation of the process shown in Figure **3A** and Figure **3B** that illustrates connecting to a preferred application on a target device based on the application directory information retrieved via the application information exchange. Once source device **300** receives the distributed application directory from peer device **320**, source device **300** can check the distributed application directory to determine whether a device such as target device **340** possesses a preferred application based only on the inquiry response message (i.e., the Bluetooth BD_ADDR message). Thus, source device **300** establishes a connection to a device when the distributed application directory indicates that the preferred application is available and avoids establishing unnecessary connections with devices that do not possess the preferred application.

Source device **300** initiates the process shown in Figure **3C** by sending an inquiry request to the mobile ad-hoc communications network (step **314**). Target device **340,** one of the devices in the mobile ad-hoc communications network that is in inquiry scan mode, receives the inquiry request (step **341**) and responds by sending an inquiry response message (step **342**). In one embodiment, the inquiry response message is a Bluetooth inquiry result command modified to indicate that target device **340** includes a middleware layer. Source device **300** receives the inquiry response message (step **315**). Source device **300** examines the inquiry response message to determine whether the inquiry response message includes an indication that peer device **320** may include the middleware layer (not shown). In addition, source device **300** examines the distributed application information stored in source device **300** to determine whether target device **340** supports the preferred application (step **316**). If target device **340** does not support the preferred application, the process exits. If target device **340** supports the preferred application, source device **300** sends a paging request message (step **317**). Target device **340** receives the paging request message (step **343**) and sends a paging accept message in response (step **344**). Source device **300** receives the paging accept message (step **318**) and establishes a link connection (step **319**) with target device **340** (step **345**). Thus, source device **300** and target device **340** begin communication, respectively, by executing the preferred application (steps **319** and **345**).

According to the disclosed invention, the middleware architecture is responsible for storing the combined application directory within all network nodes and distributing it to all other devices having said middleware. Thus, there is a distributed "flowing" application directory present with various "versions" within the ad-hoc network, wherein the versions depend on when the devices were connected on the network. The application directory information exchange is performed immediately after determining whether the middleware architecture is present via the SDP protocol. However, it is possible to have this kind of system also as an extension to the SDP itself, as described above. If a terminal has already stored combined application directory information, the terminal is capable of selecting the best possible. communication counterpart for providing more efficient connection establishment without unnecessary connections with other peer devices that are not providing preferred services.

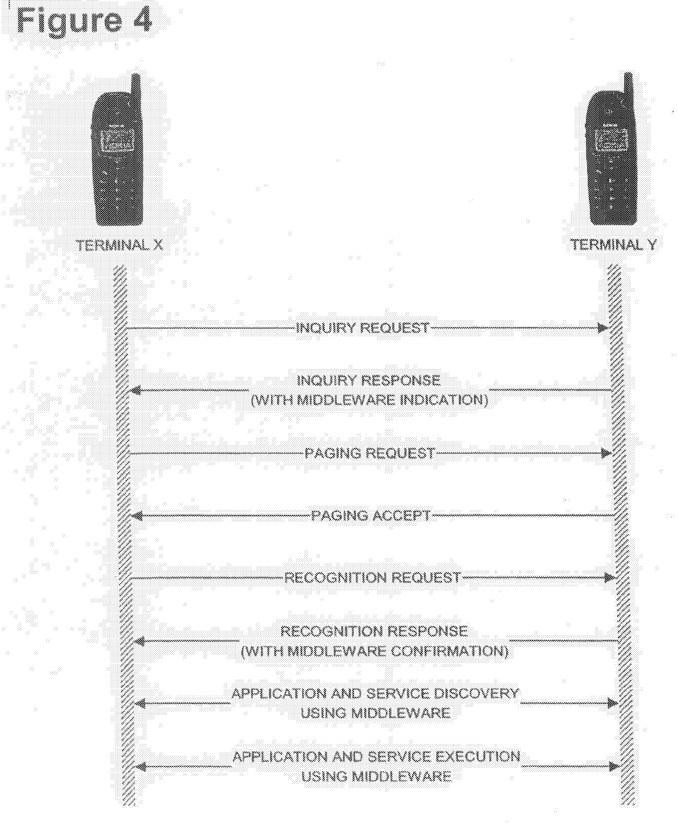

Figure **4** is a flow diagram of an embodiment of a process that illustrates the message flow during establishment of a communication session between terminal X and terminal Y in a mobile ad-hoc communications network. In one embodiment, terminal X and terminal Y are mobile devices such as terminal **120** shown in Figure **1** and Figure **2B.** In another embodiment, terminal X is a mobile device such as terminal **120** shown in Figure **1** and Figure **2B** and terminal Y is a mobile device such as server **110** shown in Figure **1** and Figure **2A.**

As shown in Figure **4,** terminal X initiates the communication by sending an inquiry request message to the mobile ad-hoc communications network. Since terminal Y is a nearby device, terminal Y receives the inquiry request message and sends an inquiry response message to terminal X. In one embodiment, the inquiry request message is a Bluetooth inquiry command and the inquiry response message is a Bluetooth inquiry result command. In another embodiment, the inquiry request message is a Bluetooth inquiry command and the inquiry response message is a Bluetooth inquiry result command modified to indicate that the terminal sending the Bluetooth inquiry result command includes a middleware layer. In one embodiment, the middleware layer includes dedicated middleware software providing advanced application and service discovery and execution. In one embodiment, the modification to the Bluetooth inquiry result command is to the Class of Device (CoD) parameters. For example, if the terminal sending the Bluetooth inquiry result command includes the middleware layer, the terminal will set at least the "ad-hoc networking aware" bit (bit 16) to on (1). Alternatively, if the terminal sending the Bluetooth inquiry result command includes the middleware layer, the terminal will set the "ad-hoc networking aware" bit (bit 16) to on (1), and the "location info" bit (bit 17) to off (0). Alternatively, if the terminal sending the Bluetooth inquiry result command includes the middleware layer, the terminal will set the "ad-hoc networking aware" bit (bit 16) to on (1), and the "telephony capable" bit (bit 22) to on (1). Alternatively, if the terminal sending the Bluetooth inquiry result command includes the middleware layer, the terminal will set the "ad-hoc networking aware" bit (bit 16) to on (1), the "location info" bit (bit 17) to off (0), and the "telephony capable" bit (bit 22) to on (1). In yet another embodiment, the modification to the Bluetooth inquiry result command is not necessary, if a dedicated indication parameter to indicate the presence of the middleware software is introduced to the Bluetooth inquiry result command specifications.

Following the inquiry, as shown in Figure **4,** terminal X may create a connection to each nearby device indicating possible possession of the middleware layer by the inquiry response message, such as terminal Y, by sending a paging request message. If terminal Y does not indicate possible possession of the middleware layer (e.g., by setting the "ad-hoc networking aware" bit (bit 16) to off (0)), no paging request message is transmitted and the communication session is disconnected. After conducting an inquiry including an indication that terminal Y possibly includes a middleware layer, terminal X sends the paging message request, as discussed above. Terminal Y receives the paging request message and optionally sends a paging accept message to accept the connection request. In one embodiment, the paging request message is a Bluetooth create connection command and the paging accept message is a Bluetooth accept connection request command.

Following the connection to each nearby device, as shown in Figure **4,** terminal X sends a recognition request message to confirm whether a nearby device such as terminal Y definitely includes the middleware layer. Terminal Y receives the recognition request message and sends a recognition response message to terminal X. In one embodiment, the receipt of the recognition response message is confirmation that terminal Y includes the middleware layer. In another embodiment, the content of the recognition response message will indicate whether terminal Y includes the middleware layer. In one embodiment, the recognition request message and the recognition response message utilize the Bluetooth Service Discovery Protocol (SDP). If terminal Y does not include the middleware layer, the communication session may be disconnected.

Following the confirmation that a nearby device such as terminal Y includes the middleware layer, as shown in Figure **4,** terminal X and terminal Y use the middleware layer to discover and launch applications and services. In one embodiment, terminal X and terminal Y use the methods disclosed in the flow diagrams shown in Figures **3A-3C** to discover and launch applications and services.

Although the disclosed embodiments describe a fully functioning system and method for establishing link connections between wireless devices in an ad-hoc communications network, the reader should understand that other equivalent embodiments exist. Since numerous modifications and variations will occur to those who review this disclosure, the system and method for establishing link connections between wireless devices in an ad-hoc communications network is not limited to the exact construction and operation illustrated and disclosed. Accordingly, this disclosure intends all suitable modifications and equivalents to fall within the scope of the claims.

## Claims

1. A system for locating at least one target device that supports a required service in an ad-hoc communications network connecting at least one device and supporting at least one service, wherein each said at least one target device is one of said at least one device and the required service is one of said at least one service, comprising:
a memory device; and
a processor disposed in communication with the memory device, the processor configured to:
conduct an inquiry of the ad-hoc communications network to discover at least one nearby device in said at least one device, the inquiry including an indication that said at least one nearby device may include a middleware layer;
when the inquiry includes the indication that said at least one nearby device may include the middleware layer:
create a connection to a peer device of said at least one nearby device;
confirm whether the peer device includes the middleware layer;
when the peer device includes the middleware layer:
send a service discovery request to the peer device; and
receive a response to the service discovery request, the response including distributed information,
wherein the distributed information includes at least one reference to the required service and an association between each reference and one of said at least one target device.

2. A system according to claim 1, wherein a density of said at least one nearby device over a coverage area for the ad-hoc communications network is high.

3. A system according to claim 1 or 2, wherein the distributed information includes at least one information record, each information record including at least one of device information or application information and when the peer device includes the middleware layer, the processor is further configured to:
store the disclosed information in a portion of the memory device,
wherein the portion includes at least one record.

4. A system according to claim 3, wherein when the portion of the memory device is full, to store the disclosed information, the processor is further configured to:
identify an oldest record of said at least one record; and
overwrite the oldest record with a new information record from said at least one information record.

5. A system according to any preceding claim, wherein a portion of the memory device includes exchanged information that identifies at least one application or service that said at least one nearby device supports and wherein when receiving an inquiry request from one of said at least one nearby device, the processor is further configured to:
distribute the exchanged information as part of a service discovery response.

6. A system according to any preceding claim, wherein when the peer device includes the middleware layer, the processor is further configured to:
establish a link connection to one of said at least one target device; and
access the requested service.

7. A method for locating at least one target device that supports a required service in an ad-hoc communications network connecting at least one device and supporting at least one service, wherein each said at least one target device is one of said at least one device and the required service is one of said at least one service, comprising:
conducting an inquiry of the ad-hoc communications network to discover at least one nearby device in said at least one device, the inquiry including an indication that said at least one nearby device may include a middleware layer;
when the inquiry includes the indication that said at least one nearby device may include the middleware layer:
creating a connection to a peer device of said at least one nearby device;
confirming whether the peer device includes the middleware layer;
when the peer device includes the middleware layer:
sending a service discovery request to the peer device; and
receiving a response to the service discovery request, the response including distributed information,
wherein the distributed information includes at least one reference to the required service and an association between each reference and one of said at least one target device.

8. A method according to claim 7, wherein a density of said at least one nearby device over a coverage area for the ad-hoc communications network is high.

9. A method according to claim 7 or 8, wherein the distributed information includes at least one information record, each information record including at least one of device information or application information and wherein when the peer device includes the middleware layer, the method further comprises:
storing the disclosed information in a portion of the memory device,
wherein the portion includes at least one record.

10. A method according to claim 9, wherein when the portion of the memory device is full, the storing of the disclosed information further comprises:
identifying an oldest record of said at least one record; and
overwriting the oldest record with a new information record from said at least one information record.

11. A method according to claim 9, wherein when the portion of the memory device is full, the storing of the disclosed information further comprises:
identifying an old record of said at least one record;
identifying a new information record from said at least one information record, the new information record being a replacement for the old record; and
overwriting the old record with the new information record.

12. A method according to any one of claims 7 to 11, wherein a portion of the memory device includes exchanged information that identifies at least one application or service that at least one nearby device supports and wherein when receiving an inquiry request from one of said at least one nearby device, the method further comprises:
distributing the exchanged information as part of a service discovery response.

13. A method according to any one of claims 7 to 12, wherein when the peer device includes the middleware layer, the method further comprises:
establishing a link connection to one of said at least one target device; and
accessing the requested service.

14. A computer program product for locating at least one target device that supports a required service in an ad-hoc communications network connecting at least one device and supporting at least one service, wherein each said at least one target device is one of said at least one device and the required service is one of said at least one service, comprising:
a computer readable medium storing:
program code for conducting an inquiry of the ad-hoc communications network to discover at least one nearby device in said at least one device, the inquiry including an indication that said at least one nearby device may include a middleware layer;
program code for creating a connection to a peer device of said at least one nearby device;
program code for confirming whether the peer device includes the middleware layer;
program code for sending a service discovery request to the peer device; and
program code for receiving a response to the service discovery request, the response including distributed information,
wherein the distributed information includes at least one reference to the required service and an association between each reference and one of said at least one target device.

15. A system for locating a target device that supports a required service in an ad-hoc communications network connecting at least one device and supporting at least one service, wherein the target device is one of said at least one device and the required service is one of said at least one service, comprising:
a memory device; and
a processor disposed in communication with the memory device, the processor configured to:
maintain a distributed database to associate each said at least one service to at least one of said at least one device;
conduct an inquiry of the ad-hoc communications network to discover at least one nearby device in said at least one device, the inquiry including an indication that said at least one nearby device may include a middleware layer; and
access the distributed database to determine whether said at least one nearby device includes the required service.

16. A system according to claim 15, wherein the processor is further configured to:
establish a link connection with said at least one nearby device if the distributed database includes an association between said at least one nearby device and the required service.

17. A system according to claim 15 or 16, wherein the processor is further configured to:
decline a link connection with said at least one nearby device if the distributed database indicates that said at least one nearby device does not include the required service.

18. A method for locating a target device that supports a required service in an ad-hoc communications network connecting at least one device and supporting at least one service, wherein the target device is one of said at least one device and the required service is one of said at least one service, comprising:
maintaining a distributed database to associate each said at least one service to at least one of said at least one device;
conducting an inquiry of the ad-hoc communications network to discover at least one nearby device in said at least one device, the inquiry including an indication that said at least one nearby device may include a middleware layer; and
accessing the distributed database to determine whether said at least one nearby device includes the required service.

19. A method according to claim 18, further comprising:
establishing a link connection with said at least one nearby device if the distributed database includes an association between said at least one nearby device and the required service.

20. A method according to claim 18 or 19, further comprising:
declining a link connection with said at least one nearby device if the distributed database indicates that said at least one nearby device does not include the required service.

21. A system for locating a target device that supports a required service in an ad-hoc communications network connecting at least one device and supporting at least one service, wherein the target device is one of said at least one device and the required service is one of said at least one service, comprising:
means for maintaining a distributed database to associate each said at least one service to at least one of said at least one device;
means for conducting an inquiry of the ad-hoc communications network to discover at least one nearby device in said at least one device, the inquiry including an indication that said at least one nearby device may include a middleware layer; and
means for accessing the distributed database to determine whether said at least one nearby device includes the required service.

22. A system according to claim 21, further comprising:
means for establishing a link connection with said at least one nearby device if the distributed database includes an association between said at least one nearby device and the required service.

23. A system according to claim 21 or 22, further comprising:
means for declining a link connection with said at least one nearby device if the distributed database indicates that said at least one nearby device does not include the required service.
